# EUROPÄISCHE PATENTANMELDUNG

(11) **EP 4 458 150 A1**
(43) Veröffentlichungstag der Anmeldung: **06.11.2024**
(21) Anmeldenummer: 24174063.8
(22) Anmeldetag: 03.05.2024
(51) Int. Cl.: A01M 23/00, A01K 1/02, A01K 1/03, E06B 7/32

(54) **BOX ZUM TRANSPORT UND/ODER ZUR UNTERBRINGUNG EINES TIERS**

(30) Priorität: 03.05.2023 DE 202023102392 U
(71) Anmelder: Zajonc, Monika, 69115 Heidelberg (DE)
(72) Erfinder: Zajonc, Monika, 69115 Heidelberg (DE)
(74) Vertreter: Ullrich & Naumann PartG mbB

(57) **Zusammenfassung**

Die Erfindung betrifft eine Box (1) zum Transport und/oder zur Unterbringung eines Tiers, umfassend einen Boden (2), einen Deckel (3), mehrere Seitenwände (5a-d) und zumindest eine Liegefläche (11a, 11b), wobei an zumindest einer Seitenwand und/oder dem Deckel eine Klappe (4), durch die das Tier in die Box gelangen kann, angeordnet ist, wobei ein engmaschiges und/oder nagetiersicheres Gitter (15) an zumindest einer Seitenwand und/oder dem Deckel der Box angeordnet ist und wobei zumindest ein Teil einer der Seitenwände von der Box lösbar ist, wobei in der Box eine Nagetierfalle (13) angeordnet ist.

## Beschreibung

Die Erfindung betrifft eine Box zum Transport und/oder zur Unterbringung eines Tiers.

Obwohl allgemein für beliebige Tiere einsetzbar, wird die vorliegende Erfindung anhand von Katzen beschrieben.

Boxen der in Rede stehenden Art sind seit Jahren aus der Praxis bekannt. Beispielsweise zeigt die GB 2 448 559 eine Box aus mehreren Gitterwänden, die vor eine Katzenklappe einer Haustür gestellt werden kann. Wenn eine Katze eine Maus fängt, kann sie zwar durch die Katzenklappe in die Box gelangen, jedoch nicht die Maus im Haus verstecken. Außerdem wird verhindert, dass andere Tiere durch die Katzenklappe ins Haus gelangen können.

Nachteilig an dieser Konstruktion ist jedoch, dass Katzen häufig die Mäuse lebend fangen, um mit Ihnen zu spielen. Somit könnte die Maus der Katze in der Box entfliehen und durch das Gitter ins Haus gelangen. Es ist ebenfalls möglich, dass sich die Maus in der Box versteckt und beim Öffnen der Box ins Haus läuft.

Der vorliegenden Erfindung liegt daher die Aufgabe zugrunde, eine Box der eingangs genannten Art derart auszugestalten und weiterzubilden, dass Nagetiere wie Mäuse oder andere Beutetiere der Katze wie Eichhörnchen, Vögel oder Salamander nicht aus der Box entfliehen können.

Erfindungsgemäß wird die voranstehende Aufgabe durch die Merkmale des Patentanspruches 1 gelöst. Danach ist eine Box vorgesehen, umfassend einen Boden, einen Deckel, mehrere Seitenwände und zumindest eine Liegefläche, wobei an zumindest einer Seitenwand eine Klappe, durch die das Tier in die Box gelangen kann, angeordnet ist, wobei ein engmaschiges und/oder nagetiersicheres Gitter an zumindest einer Seitenwand und/oder dem Deckel der Box angeordnet ist und wobei zumindest ein Teil einer der Seitenwände von der Box lösbar ist. Die Box ist dadurch gekennzeichnet, dass in der Box eine Nagetierfalle angeordnet ist.

In erfindungsgemäßer Weise ist zunächst erkannt worden, dass durch das Anordnen einer Nagetierfalle in der Box selbst, eventuell durch die Katze eingeschleppte Mäuse nicht ins Haus gelangen können, sondern in der Nagetierfalle gefangen werden.

Die Box kann vor eine Katzenklappe, beispielsweise in einer Haus- oder Kellertür oder in einem Fenster, gestellt werden. Dabei wird diejenige Seitenwand, die lösbar ist, entfernt und die Box mit derjenigen Seite, an der die lösbare Seitenwand angeordnet war, direkt an die Katzenklappe gestellt. So wird verhindert, dass die Katze oder Nagetiere durch einen Spalt zwischen der Haustür und der Box ins Haus gelangen können. Es ist ebenfalls denkbar, dass die Box vor einem Fenster mit einer entsprechenden Katzenklappe befestigt wird. Die Seitenwand kann beispielsweise seitlich in die Box eingeschoben werden, sodass die Box von einem Besitzer verschlossen werden kann, ohne die Box von der Tür entfernen zu müssen. Somit wird verhindert, dass Tiere in der Box aus der durch die Seitenwand verursachten Öffnung herauslaufen können. Es ist ebenfalls denkbar, dass lediglich ein Teil der Seitenwand entfernbar ist, wobei durch Entfernen eines Teils der Seitenwand eine ausreichend große Öffnung entsteht, dass die Katze durch die Öffnung in die Box gelangen kann.

Durch die Öffnung kann eine Katze von außerhalb des Hauses durch die Katzenklappe direkt in die Box gelangen. Alternativ kann die Katze durch die Klappe, die insbesondere ebenfalls als Katzenklappe ausgebildet ist, aus dem Haus in die Box gelangen und von dort nach draußen. In bevorzugter Weise ist die Klappe der Box derart gestaltet, dass sie die Katze aus dem Haus in die Box hineinlässt, jedoch nicht aus der Box heraus ins Haus. Auf diese Weise wird gewährleistet, dass die Katze nachts selbstständig das Haus durch die Box verlassen kann, jedoch keine Tiere in die Wohnung tragen kann. Mit anderen Worten kann die Katze jederzeit durch die offene Seitenwand, die an einer Katzenklappe einer Haustür angeordnet ist, von außerhalb des Hauses in die Box und umgekehrt gelangen. Sie kann jedoch innerhalb des Hauses zwar durch die Klappe in die Box hineingelangen, jedoch nicht zurück ins Haus.

Wenn die Katze eine lebende Maus in die Box trägt, wird die Maus durch die Nagetierfalle gefangen und kann zu einem späteren Zeitpunkt entfernt werden. Dabei wird durch das engmaschige Gitter verhindert, dass die Maus aus der Box entkommen kann. Gleichzeitig erlaubt das engmaschige Gitter eine Durchlüftung der Box, sodass die Katze insbesondere im Sommer nicht überhitzt.

Durch die vorgesehene Liegefläche hat die Katze einen Rückzugsort an der sie verweilen kann.

Gemäß einer vorteilhaften Ausgestaltung der Erfindung ist eine Futtervorrichtung angeordnet. Somit kann die Katze nachts fressen, ohne dass der Besitzer sie füttern müsste. Insbesondere kann die Nagetierfalle in der Futtervorrichtung integriert sein. Beispielsweise kann die Futtervorrichtung einen zwei- oder dreigeteilten Behälter umfassen, wobei in den oberen Teil Wasser und Nass- oder Trockenfutter eingelegt werden können und wobei unterhalb der Futtervorrichtung im unteren, inneren Teil die Nagetierfalle integriert ist. Der Behälter kann anschließend in der Box befestigt werden. Der Behälter kann an den Seiten Öffnungen aufweisen, sodass die Maus in den Behälter und somit in die Nagetierfalle laufen kann, die Katze jedoch nicht durch die Falle verletzt werden kann. Insbesondere ist der Behälter derart ausgebildet, dass die Öffnungen im angeordneten Zustand der Box an einer Wand der Box angeordnet sind, da Mäuse bevorzugt an Wänden entlanglaufen.

In vorteilhafter Weise umfassen der Boden, der Deckel, die Seitenwände und/oder die Futtervorrichtung ein durchsichtiges Material. Ein Vorteil hiervon ist, dass durch eine Person direkt erkannt werden kann, ob sich eine Maus in der Box befindet. Außerdem kann erkannt werden, ob beispielsweise eine Batterie für eine Katzenklappe leer ist.

In einer bevorzugten Ausgestaltung ist eine Zwischenebene in der Box angeordnet, wobei die Liegefläche auf der Zwischenebene und/oder unten in der Box angeordnet ist. Die Box ist in diesem Fall zweistöckig ausgebildet. Durch den ersten Stock kann die Katze in und aus der Box laufen, sowie fressen. Im zweiten Stock kann sich die Liegefläche der Katze befinden. Hierdurch wird gewährleistet, dass keine kalte Zugluft von draußen die Katze erreicht, solange sie sich auf der Liegefläche befindet.

Die Klappe kann elektronisch mittels eines Chip-Sensors steuerbar sein. Insbesondere kann die Klappe derart gesteuert werden, dass die Klappe sich öffnet, wenn die Katze in die Box hineingehen möchte, jedoch verschlossen bleibt, wenn die Katze aus der Box herausgehen möchte. Durch die elektronische Steuerung kann dies einfach implementiert werden.

Die Box kann vorteilhafterweise einen Deckel umfassen, der von der Box lösbar und/oder von der Box abklappbar ist. Die Box ist somit zumindest zweigeteilt bestehend aus einem Boden und einem Deckel. Der Deckel kann entweder vollständig von der Box entfernt werden, oder mittels Scharnieren seitlich hochgeklappt werden. Auf diese Weise kann das Innenleben der Box einfach gereinigt werden, die Katze aus der Box gehoben werden und/oder Nagetiere im Inneren der Box erkannt werden.

Vorteilhafterweise ist die Größe und/oder die Höhe der Box einstellbar. Hierfür können beispielsweise höhenverstellbare Füße an der Box angeordnet sein, auf denen die Box stehen kann. Durch Veränderung der Höhe der Füße kann die Höhe der Box eingestellt werden. Es ist ebenfalls denkbar, dass die Box teleskopartig auseinandergezogen werden kann, um so die Größe der Box anzupassen. Ein Vorteil hiervon ist, dass die Größe der Box auf die Bedürfnisse der Katze angepasst werden kann. Ein weiterer Vorteil hiervon ist, dass die Box auf die Höhe der Katzenklappe in der Haustür angepasst werden kann. Beispielsweise könnte die Höhe der Box durch die höhenverstellbaren Füße soweit erhöht werden, dass die Katze komfortabel durch die Katzenklappe in der Haustür in die vor der Haustür angeordnete Box gelangen kann.

Zur Positionierung der Box kann eine Haltevorrichtung angeordnet sein, mit der die Box an einem Fenster, einer Tür und/oder einem Untergrund festlegbar ist. Die Haltevorrichtung kann beispielsweise Ösen, Haken, Schrauben, Saugnäpfe, Klemmen oder Vorsprünge umfassen. Insbesondere kann die Haltevorrichtung eine Gummierung des Bodens und/oder Füße der Box umfassen, sodass die Box nicht durch Bewegungen beziehungsweise Scharren der Katze wegrutschen kann.

In einer vorteilhaften Ausgestaltung der Erfindung ist die Box pyramidenförmig ausgebildet. Beispielsweise kann die Box die Form einer abgeschnittenen Pyramide aufweisen. Dabei wird die Box derart an einer Haustür angeordnet, dass die Spitze der Pyramide in Richtung von Scharnieren der Haustür zeigt. Wenn die Haustür von einem Benutzer geöffnet wird, blockiert die Box aufgrund der Pyramidenform nicht die Tür, sodass diese geöffnet werden kann, ohne gegen eine nahe der Tür befindliche Wand zu stoßen und ein sich darin befindliches Tier oder eine sich darin befindliche Katze zu verletzen.

Es ist denkbar, dass eine lösbar ausgebildete Schublade und/oder Klappe in der Box vorgesehen ist, in der oder hinter der die Nagetierfalle, die Futtervorrichtung und/oder die Liegefläche angeordnet ist. Hierdurch kann der Zugang zu der Nagetierfalle, der Futtervorrichtung oder der Liegefläche besonders einfach ermöglicht werden, da die Vorrichtungen ohne Öffnen der Box entfernt werden können. Dies ermöglicht eine besonders einfache Reinigung oder Entnahme der in der Nagetierfalle gefangenen Tiere. Die Schublade kann beispielsweise transparent sein, sodass ein gefangenes Nagetier von außen erkennbar ist.

Gemäß einer vorteilhaften Ausgestaltung der Erfindung ist ein, insbesondere entfernbarer, Kasten mit Luftlöchern vorgesehen. Insbesondere kann die Nagetierfalle in dem Kasten vorgesehen sein. Der Kasten kann auf dem Boden der Box angeordnet sein und den Boden teilweise überdecken. Es ist ebenfalls denkbar, dass der Kasten den gesamten Boden überdeckt, sodass der Kasten eine zusätzliche Ebene in der Box bildet. In diesem Fall kann der Kasten auch als ein flächiges Brett ausgebildet sein, das auf Vorsprüngen in der Box angeordnet sein kann. Die Nagetierfalle ist in dem Kasten vorgesehen. Hierdurch wird ein zusätzlicher Bereich zur Verfügung gestellt, in dem das Nagetier sich aufhalten kann, ohne dem Tier begegnen zu können. Durch die Luftlöcher wird verhindert, dass das Nagetier in dem Kasten erstickt. Der Kasten kann Befestigungsmittel umfassen, mit denen der Kasten in der Box befestigbar ist. Des Weiteren kann der Kasten vollständig oder teilweise transparent ausgebildet sein, sodass erkennbar ist, ob sich ein Nagetier in dem Kasten befindet. In dem Kasten kann ein Fach oder eine Schublade vorgesehen sein, mit der das Nagetier auf einfache Weise aus dem Kasten entfernbar ist.

Insbesondere können in dem Kasten Öffnungen und/oder Klappen vorgesehen sein, durch die das Nagetier in den Kasten hinein- aber nicht hinausgelangen kann. Beispielsweise können die Klappen in Form von Falltüren auf einer Oberseite des Kastens oder in Form von Einwegtüren an einer Vorderseite des Kastens ausgebildet sein. Der Kasten kann somit die Nagetierfalle umfassen und/oder selbst als Nagetierfalle vorgesehen sein. Hierdurch kann verhindert werden, dass das Nagetier sich längere Zeit in einem Aufenthaltsbereich der Katze befindet. Somit wird die Gefahr verringert, dass das Nagetier das Futter des Tiers frisst, das Tier angreift und/oder Liegeflächen in der Box beschädigt.

Bevorzugt ist der Kasten so hoch, dass eine Nagetierfalle darin angeordnet werden kann, aber das Tier nicht hineingelangen kann. Es ist ebenfalls denkbar, dass die Öffnungen und/oder Klappen derart ausgebildet sind, dass Nagetiere durch sie hindurch gelangen kann, jedoch nicht das Tier. Auf diese Weise wird ein Anreiz für das Nagetier geschaffen, sich in den Kasten zu begeben.

Derartige Öffnungen und/oder Klappen können alternativ oder zusätzlich in einer Zwischenebene der Box vorgesehen sein, in der eine Liegefläche angeordnet sein kann. Da die Liegefläche für das Tier bevorzugt auf der Zwischenebene angeordnet ist, wird sich das Tier bevorzugt in der Zwischenebene aufhalten. Durch die Öffnungen und/oder Klappen wird die Zeit verringert, in der sich das Nagetier in demselben Bereich wie das Tier befindet.

Vorteilhafterweise weist die Futtervorrichtung und/oder die Liegefläche einen Überhang auf, wobei der Überhang vom Boden beabstandet ist. Der Überhang kann beispielsweise als umlaufende Krempe, insbesondere einer nach unten gewölbten Krempe, ausgebildet sein. Ein Vorteil hiervon ist, dass das Nagetier nicht auf einfache Weise in den Liegebereich des Tieres und/oder zu dem Futter des Tieres gelangen kann. Ein weiterer Vorteil ist, dass das Nagetier einen höheren Anreiz hat, sich in die Nagetierfalle zu bewegen, da die Liegefläche und/oder die Futtervorrichtung nicht erreichbar sind.

Insbesondere ist es vorteilhaft, wenn die Futtervorrichtung erhöht angeordnet ist, beispielsweise auf einem Pfeiler oder einem Podest. Hierdurch wird, insbesondere in Verbindung mit einem umlaufenden Überhang, wirkungsvoll verhindert, dass das Nagetier die Futtervorrichtung erreichen kann. Insbesondere kann verhindert werden, dass das Nagetier sich an dem Futter in der Futtervorrichtung satt fressen kann, sodass es weniger Anreiz hat, sich zu einem Köder in der Nagetierfalle zu begeben.

Vorteilhafterweise ist die Liegefläche erhöht angeordnet, beispielsweise auf einem Pfeiler und/oder einem Podest. Die Liegefläche kann analog zu der Futtervorrichtung mit einem Überhang ausgebildet werden. Somit kann ein "Etagenbett" vorgesehen werden, das Nagetiere nicht erreichen können. Der Pfeiler oder das Podest kann eine glatte Oberfläche umfassen, sodass Nagetiere den Pfeiler oder das Podest nicht erklimmen können. Auf diese Weise kann verhindert werden, dass Nagetiere Textilien der Liegefläche zerfressen.

Es ist ebenfalls denkbar, dass weitere Boxen an der Box festgelegt werden können, insbesondere wobei der Deckel oder eine der Seitenwände entfernbar ist. Beispielsweise kann auf diese Weise eine größere Box bereitgestellt werden, in der mehrere Liegeflächen für mehrere Tiere vorgesehen sind. Insbesondere können die Boxen in beliebiger Weise miteinander verbunden werden, beispielsweise nebeneinander oder übereinander angeordnet werden. Es ist vorteilhaft, wenn der Deckel oder eine/mehrere der Seitenwände entfernbar sind, sodass die Tiere sich auf einfache Weise von einer Box in eine angrenzende Box bewegen können. Alternativ oder zusätzlich könnte ein Durchgang vorgesehen sein, durch den das Tier von einer Box in eine angrenzende Box gelangen kann. Beispielsweise könnte eine Box eine Basisbox sein, in die weitere Boxen ansteckbar, anklipsbar oder anschraubbar sind. Es ist ebenfalls möglich, dass die Box als Kompaktbox ausgebildet ist, die direkt miteinander verbindbar sind. Insbesondere ist es denkbar, dass ein Adapter vorgesehen ist, mit dem verschiedene Boxen miteinander verbindbar sind. Beispielsweise könnten die Boxen seitlich aneinander angeordnet werden, sodass die Boxen vor einem langen Fenster angeordnet werden können, die Boxen könnten übereinander angeordnet werden, sodass die Boxen an einer Tür oder einem hohen Fenster angeordnet werden können, oder die Boxen können hintereinander angeordnet werden, sodass die Box vor einem Fenster mit langer Fensterbank angeordnet werden können.

Gemäß einer vorteilhaften Ausgestaltung der Erfindung sind zusätzliche Trennwände in der Box einsetzbar, sodass einzelne Bereiche der Box abtrennbar sind. Die zusätzlichen Trennwände können horizontal oder vertikal angeordnet werden. Es ist denkbar, dass Öffnungen in den Trennwänden vorgesehen sind, durch die das Tier laufen kann.

In vorteilhafterweise Weise umfasst die Box einen Kunststoff, insbesondere einen recycelten Kunststoff. Insbesondere kann die Box aus einem Material mit einem derart niedrigen Wärmeleitkoeffizienten hergestellt sein, dass sich die Box nicht derart stark aufwärmen kann, dass eine Verbrennungsgefahr für das Tier besteht. Ein Vorteil hiervon ist, dass eine Verletzungsgefahr für das Tier minimiert wird. Vorteilhafterweise umfasst die Box ein glattes Material, sodass Nagetiere nicht an den Wänden der Box hinaufklettern können.

Gemäß einer Vorteilhaften Weiterbildung der Erfindung sind an der Box Rollen oder Reifen angeordnet, mit denen die Box auf einfache Weise verschoben werden kann. Es ist ebenfalls denkbar, dass an der Box eine Klemmvorrichtung angeordnet ist, mit der die Box an einem Fenster oder an einer Tür festgeklemmt werden kann. Hierdurch wird verhindert, dass die Box von dem Tier bewegt wird.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: Eine Box gemäß einer Ausführungsform der vorliegenden Erfindung;
- Fig. 2: Eine Box gemäß einer weiteren Ausführungsform der vorliegenden Erfindung.

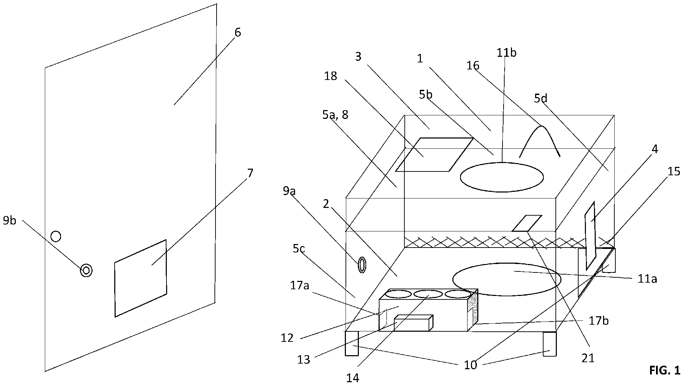

Fig. 1 zeigt eine Box gemäß einer Ausführungsform der vorliegenden Erfindung.

Die Box 1 umfasst einen Boden 2, einen Deckel 3 und Seitenwände 5a, 5b, 5c und 5d. In einer Seitenwand 5d ist eine Klappe 4 angeordnet, die analog zu einer Katzenklappe elektronisch steuerbar ist, sodass eine Katze von außen in die Box 1 gelangen kann. Dabei wird durch die Klappe 4 verhindert, dass die Katze aus der Box 1 zusammen mit eventuell gefangenen Beutetieren wie Nagetieren, Vögeln oder Eichhörnchen ins Haus gelangt. Es ist ebenfalls denkbar, dass die Klappe 4 im Deckel 3 der Box 1 angeordnet ist. Der Deckel 3 ist von der Box 1 entfernbar, sodass der Innenraum der Box 1 leicht gereinigt werden kann. Die Box 1 kann beispielsweise aus einem transparenten Material bestehen, beispielsweise aus recycelten Plastik, sodass Nagetiere in der Box 1 leicht zu erkennen sind. Zusätzlich können Luftlöcher vorgesehen sein, um eine ausreichende Durchlüftung der Box 1 zu gewährleisten. An dem Deckel 3 kann ein Henkel 16 zum Tragen der Box vorgesehen sein.

Die Seitenwand 5a ist von der Box 1 entfernbar. Beispielsweise kann die Seitenwand 5a in die Box 1 eingeschoben werden. Es ist ebenfalls denkbar, dass lediglich ein Ausschnitt der Seitenwand 5a entfernbar ist. Wenn die Seitenwand 5a entfernt ist, die Box 1 also an einer Seite 8 offen ist, kann die Box 1 mit dieser Seite 8 an eine Innenseite einer Tür 6 oder eines Fensters gestellt werden. Die Box 1 wird dabei derart vor der Tür 6 oder dem Fenster 6 positioniert, dass die offene Seite 8 vor einer Katzenklappe 7 der Tür 6 oder dem Fenster 6 angeordnet ist. Mithilfe der Haltevorrichtung 9a, hier in Form einer Öse, kann die Box 1 mit einer korrespondierenden Öse 9b an der Tür befestigt werden. Es sind jedoch auch andere Arten der Befestigung denkbar, beispielsweise mittels Klettverschluss, Haken oder Ähnlichem. Somit kann eine Katze von der Umgebung durch die Katzenklappe 7 in die Box 1 gelangen, oder durch die Klappe 4 in die Box 1 und von da durch die Katzenklappe 7 in die Umgebung. Es kann jedoch durch eine elektronische Steuerung der Klappe 4 verhindert werden, dass die Katze aus der Box 1 ins Haus gelangt. Auf diese Weise kann die Katze beispielsweise nachts in die Box laufen, jedoch keine Nagetiere oder andere Beutetiere in das Haus tragen.

An der Box 1 sind höhenverstellbare Füße 10 angeordnet, mit denen die Höhe der Box 1 derart eingestellt werden kann, dass sie optimal vor der Katzenklappe 7 positioniert werden kann. In der Box 1 ist eine Liegefläche 11a vorgesehen, beispielsweise in Form eines Katzenbetts, auf der die Katze liegen kann. Außerdem kann eine weitere Liegefläche 11b auf der Box 1 angeordnet sein. Es ist denkbar, dass bis zu drei Liegeflächen 11a, 11b auf und in der Box 1 angeordnet sind. Weiter ist eine Schublade 12 oder Klappe angeordnet, die eine Futtervorrichtung in Form einer Futterstelle 14 und eine Nagetierfalle 13 umfasst. Alternativ kann die Schublade 12 auch in Form eines Gefäßes ausgebildet sein, das in die Box 1 eingehängt wird. Die Schublade 12 kann insbesondere aus der Box 1 entnommen werden beziehungsweise die Klappe leicht aufgeklappt werden, sodass die Futterstelle 14 einfach befüllt und die Nagetierfalle 13 entleert werden kann. Durch die Nagetierfalle 13 können beispielsweise Mäuse, die die Katze gefangen und in die Box 1 gebracht hat, gefangen werden, sodass sie nicht in das Haus gelangen können. Insbesondere kann die Nagetierfalle 13 derart in der Schublade 12 angeordnet sein, dass die Katze die Nagetierfalle 13 nicht erreichen kann, sodass Verletzungen vermieden werden. Die Nagetierfalle 13 kann ebenfalls derart ausgestaltet sein, dass sie eine Katze nicht verletzen kann, jedoch Mäuse einfangen kann. Dabei kann die Futtervorrichtung 14 mit insgesamt zwei Öffnungen 17a, 17b und der Nagetierfalle 13 an der Seitenwand 5c angeordnet sein, da Mäuse bevorzugt an Wänden entlanglaufen und so direkt zur Nagetierfalle geführt werden. Es ist möglich, dass die Schublade 12 über die gesamte Breite der Box 1 ausgebildet ist, oder lediglich einen Teil der Breite der Box 1 einnimmt.

Die Box 1 kann ein nagetiersicheres Gitter 15 umfassen. In Figur 1 ist schematisch lediglich das Gitter 15 an einer Seitenwand 5b gezeigt, es ist jedoch möglich, dass sich das Gitter 15 über alle Seitenwände 5a, 5b, 5c, 5d, den Deckel 3 und/oder den Boden 2 erstreckt. Das Gitter 15 verhindert, dass Nagetiere aus der Box 1 entkommen können und erlaubt gleichzeitig eine Durchlüftung der Box 1 und Einsicht in die Box 1.

Im Deckel 3 der Box 1 kann zusätzlich eine Öffnung 18 vorhanden sein, durch die die Katze in die Box 1 gelangen kann. Insbesondere wenn die Box 1 mehrstöckig ausgebildet ist, kann sie so direkt in den oberen Stock gelangen. Der Deckel 3 der Box 1 kann von der Box 1 entfernbar sein. Beispielsweise kann der Deckel 3 von der Box weggeklappt werden oder es kann ein Teil des Deckels 3 beispielsweise eine Klappe geöffnet werden, um so in das Innere der Box greifen zu können, oder das Tier aus der Box zu entlassen.

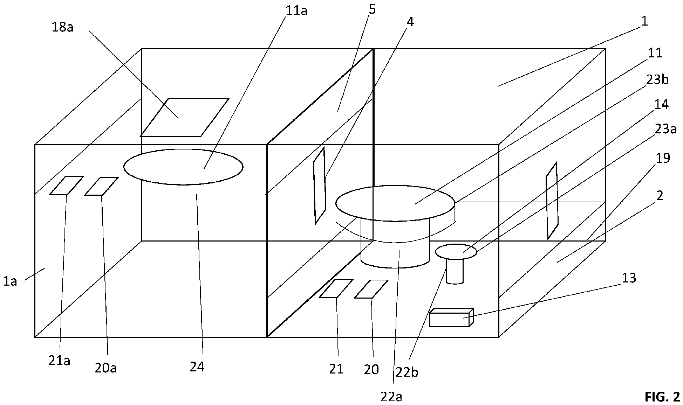

Figur 2 zeigt eine Box gemäß einer weiteren Ausführungsform der Erfindung.

Die Box 1 umfasst einen Kasten 19, der in die Box 1 eingelegt ist. Der Kasten 19 bedeckt den gesamten Boden 2 der Box 1, sodass eine Art "Keller" entsteht. Es ist ebenfalls denkbar, dass der Kasten 19 lediglich einen Teil des Bodens 2 bedeckt. Die Nagetierfalle 13 ist in dem Kasten 19 angeordnet. In dem Kasten 19 ist eine Falltür 20 angeordnet. Wenn ein Nagetier auf die Falltür 20 tritt, öffnet sich die Falltür 20 und das Nagetier fällt in den Kasten 19. Zusätzlich oder alternativ kann eine Öffnung 21 in dem Kasten 19 vorgesehen sein, sodass das Nagetier selbstständig in den Kasten 19 gelangen kann. Die Futterstelle 14 und die Liegefläche 11 sind jeweils auf einem Podest 22a, 22b angeordnet. Die Podeste 22a, 22b weisen jeweils einen Überhang 23a, 23b auf, sodass das Nagetier nicht an die Liegefläche 11 und/oder die Futterstelle 14 gelangen kann. Der Überhang kann dabei wie bei Überhang 23a dargestellt waagerecht verlaufen oder wie bei Übergang 23b dargestellt waagerecht und senkrecht in Form einer "umgedrehten Regenrinne" ausgebildet sein.

An der Box 1 ist eine weitere Box 1a angeordnet. Die Box 1a kann dieselben Merkmale aufweisen wie die Box 1 gemäß Figur 1 und/oder die Box 1 gemäß Figur 2. Die weitere Box 1a ist in die Box 1 gesteckt und somit lösbar mit der Box 1 verbunden. In der weiteren Box 1a ist eine Klappe 4 vorgesehen, sodass beispielsweise eine Katze oder ein Tier von der Box 1 in die weitere Box 1a und zurück gelangen kann. Es ist ebenfalls denkbar, dass die Seitenwand 5 von der Box 1 und der weiteren Box 1a entfernbar ist, sodass ein direkter Übergang zwischen der Box 1 und der weiteren Box 1a gebildet werden kann.

Die Box 1 umfasst eine Zwischenebene 24, auf der eine Liegefläche 11a angeordnet ist. Durch eine Öffnung 18a kann eine Katze in den oberen Bereich auf die Zwischenebene 24 gelangen. In der Zwischenebene 24 können ebenfalls eine Öffnung 21a und/oder eine Falltür 20a angeordnet sein. Hierdurch kann ein Nagetier auf einfache Weise in den unteren Bereich der weiteren Box 1a gelangen. Da sich eine Katze typischerweise hauptsächlich auf der Liegefläche 11a aufhält, wird der Zeitraum minimiert, in dem das Nagetier und die Katze sich am selben Ort aufhalten. Eine derartige Zwischenebene 24 kann auch in der Box 1 gemäß Figur 1 und/oder der Box 1 gemäß Figur 2 angeordnet sein.

Weiterhin kann zwischen der Box 1 und der weiteren Box 1a eine Öffnung vorgesehen sein, durch die ein Nagetier von der Box 1 in die weitere Box 1a gelangen kann. Die Öffnung kann beispielsweise als Einwegtür vorgesehen sein.

Alternativ oder zusätzlich ist es denkbar, dass in der weiteren Box 1a ebenfalls eine Nagetierfalle angeordnet ist. Insbesondere kann in der weiteren Box ebenfalls ein Kasten 19 vorgesehen sein. So kann gewährleistet werden, dass ein Nagetier nicht in einer Box ohne Mausefalle gefangen bleibt. Es ist ebenfalls denkbar, dass zwischen der Box 1 und der weiteren Box 1a keine Trennwand vorgesehen ist, sodass das Nagetier direkt sich von der weiteren Box 1a in die Box 1 bewegen kann.

Vorteilhafterweise ist in der Box 1 und/oder der weiteren Box 1a eine Kamera vorgesehen. Mittels der Kamera kann der Innenraum der Box 1 und/oder der weiteren Box 1a überwacht werden, insbesondere kann erkannt werden, ob sich ein Nagetier darin befindet. Falls ein Nagetier detektiert wird, kann dieses von einem Nutzer entfernt werden. Es ist ebenfalls denkbar, dass zusätzlich oder alternativ ein Bewegungssensor vorgesehen ist. Wenn hingegen erkannt wird, dass kein Nagetier sich in der Box 1 oder der weiteren Box 1a befindet, kann beispielsweise eine Katzenklappe geöffnet werden, sodass das Tier ins Haus gelangen kann. Insbesondere kann ein Signal, beispielsweise ein akustisches Signal oder ein Lichtsignal gegeben werden, insbesondere auf ein Smartphone eines Nutzers oder an der Box selbst, um zu signalisieren, dass sich ein Nagetier in der Box befindet, und/oder dass sich kein Nagetier in der Box befindet. Hierfür kann eine App vorgesehen sein, sodass ein Nutzer auf einfache Weise ein Bildsignal der Kamera empfangen kann.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1, 1a: Box
- 2: Boden
- 3: Deckel
- 4: Klappe
- 5: Seitenwand
- 6: Tür
- 7: Katzenklappe
- 8: Offene Seite
- 9: Haltevorrichtung
- 10: Fuß (höhenverstellbar)
- 11: Liegefläche
- 12: Schublade oder Klappe
- 13: Nagetierfalle
- 14: Futterstelle
- 15: Gitter
- 16: Henkel
- 17: Öffnung der Schublade
- 18: Öffnung zur oberen Liegefläche
- 19: Kasten
- 20: Falltür
- 21: Öffnung im Kasten
- 22a, 22b: Podest
- 23a, 23b: Überhang
- 24: Zwischenebene

## Patentansprüche

1. Box (1) zum Transport und/oder zur Unterbringung eines Tiers, umfassend einen Boden (2), einen Deckel (3), mehrere Seitenwände (5a, 5b, 5c, 5d) und zumindest eine Liegefläche (11a, 11b), wobei an zumindest einer Seitenwand (5b, 5c, 5d) eine Klappe (4), durch die das Tier in die Box (1) gelangen kann, angeordnet ist, wobei ein engmaschiges und/oder nagetiersicheres Gitter (15) an zumindest einer Seitenwand (5a, 5b, 5c, 5d) und/oder dem Deckel (3) der Box (1) angeordnet ist und wobei zumindest ein Teil einer der Seitenwände (5a) von der Box (1) lösbar ist, **dadurch gekennzeichnet, dass** in der Box (1) eine Nagetierfalle (13) angeordnet ist.

2. Box (1) gemäß Anspruch 1, **dadurch gekennzeichnet, dass** eine Futtervorrichtung (14) angeordnet ist.

3. Box (1) gemäß einem der Ansprüche 1 bis 2, **dadurch gekennzeichnet, dass** der Boden, der Deckel (3), die Seitenwände (5a, 5b, 5c, 5d) und/oder die Futtervorrichtung (14) ein durchsichtiges Material umfassen.

4. Box (1) gemäß einem der Ansprüche 1 bis 4, **dadurch gekennzeichnet, dass** eine Zwischenebene in der Box (1) angeordnet ist und wobei eine Liegefläche (11a, 11b) auf der Zwischenebene und/oder unten in der Box 1 angeordnet ist.

5. Box (1) gemäß einem der Ansprüche 1 bis 4, **dadurch gekennzeichnet, dass** die Klappe (4) elektronisch mittels eines Chip-Sensors steuerbar ist.

6. Box (1) gemäß einem der Ansprüche 1 bis 5, **dadurch gekennzeichnet, dass** der Deckel (3) von der Box (1) lösbar und/oder von der Box (1) abklappbar ist.

7. Box (1) gemäß einem der Ansprüche 1 bis 6, **dadurch gekennzeichnet, dass** die Größe und/oder die Höhe der Box (1) einstellbar ist.

8. Box (1) gemäß einem der Ansprüche 1 bis 7, **dadurch gekennzeichnet, dass** eine Haltevorrichtung (9a) angeordnet ist, mit der die Box (1) an einem Fenster, einer Tür (6) und/oder einem Untergrund festlegbar ist.

9. Box (1) nach einem der Ansprüche 1 bis 8, **dadurch gekennzeichnet, dass** die Box (1) pyramidenförmig ausgebildet ist.

10. Box (1) nach einem der Ansprüche 1 bis 9, **dadurch gekennzeichnet, dass** eine lösbar ausgebildete Schublade und/oder Klappe (12) vorgesehen ist, in der oder hinter der die Nagetierfalle (13), die Futtervorrichtung (14) und/oder die Liegefläche (11a, 11b) angeordnet ist.

11. Box (1) nach einem der Ansprüche 5 bis 10, **dadurch gekennzeichnet, dass**
ein, insbesondere entfernbarer, Kasten mit Luftlöchern vorgesehen ist.

12. Box (1) nach einem der Ansprüche 1 bis 11, **dadurch gekennzeichnet, dass** in der Zwischenebene und/oder in dem Kasten Klappen und/oder Öffnungen ausgebildet sind, die derart groß sind, dass ein Nagetier hindurch gelangen kann und derart klein sind, dass sie für das Tier unpassierbar sind.

13. Box (1) nach einem der Ansprüche 2 bis 12, **dadurch gekennzeichnet, dass** die Futtervorrichtung (14) und/oder die Liegefläche einen Überhang aufweist, wobei der Überhang vom Boden (2) beabstandet ist.

14. Box (1) nach einem der Ansprüche 1 bis 13, **dadurch gekennzeichnet, dass** weitere Boxen an der Box festgelegt werden können, insbesondere wobei der Deckel (3) oder eine der Seitenwände (5a, 5b, 5c, 5d) entfernbar ist.

15. Box (1) nach einem der Ansprüche 1 bis 10, **dadurch gekennzeichnet, dass** die Box einen Kunststoff, insbesondere einen recycelten Kunststoff, umfasst.
